(19) Europäisches Patentamt

European Patent Office

Office européen des brevets

(11) **EP 1 097 826 B1**

(12) **FASCICULE DE BREVET EUROPEEN**

(45) Date de publication et mention
de la délivrance du brevet:
**19.05.2004 Bulletin 2004/21**

(51) Int Cl.⁷: **B60C 11/11**, B60C 11/13,
B60C 11/03
// B60C115:00

(21) Numéro de dépôt: **00122848.5**

(22) Date de dépôt: **20.10.2000**

(54) **Motif de sculpture d'une bande de roulement**

Laufflächenprofil

Tread pattern

(84) Etats contractants désignés:
**AT BE CH CY DE DK ES FI FR GB GR IE IT LI LU
MC NL PT SE**

(30) Priorité: **08.11.1999 FR 9914094**

(43) Date de publication de la demande:
**09.05.2001 Bulletin 2001/19**

(73) Titulaires:
• **Société de Technologie Michelin
63040 Clermont-Ferrand Cedex 09 (FR)**
• **Michelin Recherche et Technique S.A.
1763 Granges-Paccot (CH)**

(72) Inventeur: **Thiebaud, Philippe
63110 Beaumont (FR)**

(74) Mandataire: **Diernaz, Christian
Michelin & Cie
Service SGD/LG/PI-LAD
63040 Clermont-Ferrand Cedex 09 (FR)**

(56) Documents cités:
**EP-A- 0 485 778          EP-A- 0 524 567
EP-A- 0 640 499          EP-A- 0 734 887**

• **PATENT ABSTRACTS OF JAPAN vol. 1999, no.
11, 30 septembre 1999 (1999-09-30) -& JP 11
151912 A (BRIDGESTONE CORP), 8 juin 1999
(1999-06-08)**

**Description**

L'invention concerne le domaine des sculptures de bande de roulement pour pneumatiques pour véhicules de type poids lourd et plus particulièrement les pneumatiques équipant les essieux moteur de ces véhicules.

La demande **EP 734887** décrit un motif de sculpture et en particulier montre une rainure délimitant une face d'attaque qui n'est pas en contre dépouille et une face de fuite qui est partiellement en contre dépouille à partir d'une certaine profondeur.

Il a été proposé dans le brevet européen **EP 0485778** une sculpture de bande de roulement, selon le préambule de la revendication 1, réduisant l'usure anormale en dent de scie constatée pour des pneumatiques équipant en particulier les essieux moteur d'un véhicule poids lourd. Cette sculpture comporte une pluralité de blocs séparés les uns des autres par des rainures d'orientation longitudinale et transversale. Une variante d'exécution présentée dans ce brevet consiste à prévoir que les parois des blocs délimitées par les rainures transversales forment avec une direction perpendiculaire à la surface de roulement des angles différents (positif pour la paroi d'attaque, négatif - en contre-dépouille - sur la paroi de fuite).

L'application d'une telle solution (et à plus forte raison celle décrite dans la demande **EP 734887**) dans le cas d'un pneumatique de grande épaisseur de bande de roulement associée à une grande profondeur de motif de sculpture (grande profondeur des découpures - à la fois rainure et incision) pour l'équipement d'essieux moteur des nouvelles générations de véhicules poids lourd à plus fort niveau de couple moteur et freineur présente un intérêt limité. En effet, du fait des dimensions propres des blocs, ceux-ci, soumis à des efforts de compression et de cisaillement dans la région du contact avec le sol, peuvent être sujet à un "flambage" mécanique (ou encore basculement des blocs) réduisant les effets positifs de ce type de sculpture essentiellement par une augmentation de la vitesse de l'usure régulière (c'est-à-dire l'usure de l'ensemble du bloc).

La présente invention vise à réaliser une bande de roulement pour enveloppe de pneumatique selon la revendication 1, destinée à un roulage essentiellement routier sur des parcours relativement sinueux qui retarde considérablement l'apparition d'usure irrégulière en dent de scie tout en augmentant la durée de vie sur usure (en augmentant les épaisseurs de gomme à user et en réduisant la vitesse d'usure). La présente invention vise également un pneumatique pour poids lourd, selon la revendication 11, pourvu d'une bande de roulement conforme à l'invention et destiné à équiper les essieux moteur.

La bande de roulement selon l'invention comporte une pluralité de blocs de gomme délimités par des rainures d'orientation générale longitudinale et transversale - de profondeur maximale H, chaque bloc étant pourvu d'une face de contact formant une partie de la surface de roulement du pneumatique destinée à venir en contact avec la route, d'une face d'attaque et d'une face de fuite formées par des rainures d'orientation générale transversale, lesdites faces d'attaque et de fuite coupant la face de contact selon deux arêtes constituant respectivement les bords d'attaque et de fuite dudit bloc.

La face d'attaque des blocs est inclinée de façon à faire un angle $\alpha$ supérieur à **90°** avec la face de contact; dans la présente description, les angles sont, par définition, mesurés à l'intérieur de la matière élastomérique composant l'élément de sculpture comme cela est visible sur la figure **2** (selon cette convention, une face latérale est dite en contre dépouille dès lors que l'angle de cette face est inférieur à **90°**).

La face de fuite est composée, dans le sens de la hauteur du bloc, de deux parties successives divisant ladite face de fuite en une partie inférieure et une partie supérieure, la partie supérieure débouchant sur la surface de roulement de la bande à l'état neuf.

Pour ajuster les rigidités de compression et de cisaillement du motif soumis à des efforts de compression et de cisaillement s'exerçant sur sa face de contact pendant le roulage d'un pneumatique équipé d'une bande de roulement selon l'invention, cette dernière est caractérisée en ce que, à l'état neuf, la partie supérieure de la face de fuite d'au moins un bloc de sculpture est en contre dépouille et forme un angle $\beta$ inférieur à **90°** avec la face de contact dudit bloc, tandis que la partie inférieure de ladite face, orientée de façon à faire un angle $\delta$ supérieur à **90°** avec la même face de contact, est pourvue d'au moins un évidement débouchant sur ladite partie inférieure. En outre, chaque évidement s'étend dans le bloc au moins jusqu'à un plan perpendiculaire à la face de contact et passant par le point de la partie inférieure de la face de fuite le plus proche de la face de contact.

Préférentiellement, le ou les évidements ne s'étendent pas dans chaque bloc au delà d'une limite prise sensiblement comme la surface prolongeant de façon tangente la partie supérieure de la face de fuite radialement vers l'intérieur du bloc. En effet, quand les évidements s'étendent trop à l'intérieur d'un bloc, l'équilibre des rigidités n'est plus satisfait et les effets bénéfiques des dispositions préconisées sont sensiblement réduits.

La sculpture selon l'invention permet de concilier à la fois une réduction de rigidité de compression dans l'épaisseur des blocs de sculpture au voisinage de leur bord de fuite et le maintien d'un haut niveau de rigidité de cisaillement dans une direction parallèle à la surface de roulement.

Préférentiellement, la limite haute de la partie inférieure de la face de fuite d'un bloc de la sculpture selon l'invention est située à une hauteur **H,** mesurée par rapport à la surface de roulement à l'état neuf et représente au moins **20%** et au plus **80%** de la hauteur totale **P** dudit bloc. Cette limite haute est définie comme la ligne de partage entre la partie supérieure et la partie inférieure de la face de fuite. Si la hauteur **H** est inférieure à **20%** de la hauteur totale **P,** la rigidité en compression du bord du bloc est trop élevée, ce qui est préjudiciable sur la performance en usure; si cette hauteur **H** est supérieure à **80%** de la hauteur totale **P,** le bord de fuite du bloc devient trop souple en compression, ce qui est également préjudiciable sur la performance en usure.

Il est apparu à la demanderesse que des résultats satisfaisants étaient obtenus dès lors que les angles β et δ vérifiaient la relation suivante :

$$\frac{1}{tg\delta} > \frac{2H}{(H-P).tg\beta}$$

avec : δ > **90°**   **et**   β < **90°**

Cette relation permet, ayant choisi un angle β pour un couple de valeurs de **H** et **P,** de trouver les valeurs optimales de l'angle δ assurant une performance optimale en usure.

Un mode de réalisation consiste à pourvoir la partie inférieure de la face de fuite avec une pluralité d'évidements régulièrement espacés dans le sens transversal, lesdits évidements s'étendant sur toute la hauteur de la partie inférieure de la face de fuite.

Afin d'obtenir un effet particulièrement sensible sur la performance en usure, le taux d'entaillement (égal au rapport entre l'aire totale de tous les évidements sur la partie inférieure de la face de fuite et l'aire de ladite partie) est compris entre **30%** et **70%.** Lorsque la valeur de ce taux d'entaillement est supérieure à **70%** l'assouplissement qui en résulte est trop important tandis que lorsque cette valeur est inférieure à **30**%, la partie inférieure du bloc est trop rigide.

Préférentiellement, ce taux d'entaillement est égal à **50%** de l'aire de la partie inférieure de la face de fuite.

De manière préférentielle, plus la surface totale de la partie intérieure de la face d'appui est grande comparativement à la surface de la partie supérieure et plus la valeur de ce taux d'entaillement choisie est grande à l'intérieur des limites précédentes.

L'invention est décrite plus en détail en regard des dessins annexés à titre d'exemples de réalisation nullement limitatifs et suivants lesquels :

la figure **1** représente une vue d'un bloc de sculpture de bande de roulement selon l'invention;

la figure **2** représente la coupe longitudinale effectuée selon la ligne **II-II** de la figure **1**;

la figure **3** représente une vue en plan de la face de fuite d'un bloc comportant plusieurs évidements de section triangulaire dans sa partie inférieure;

la figure **4** montre une sculpture directionnelle de bande de roulement pour un véhicule poids lourd comportant des blocs de sculpture selon l'invention;

la figure **5** montre une autre variante de réalisation d'une sculpture selon l'invention montrant un bloc de sculpture pourvu d'une pluralité d'évidements sur sa face de fuite et sur une partie d'une de ses faces latérales.

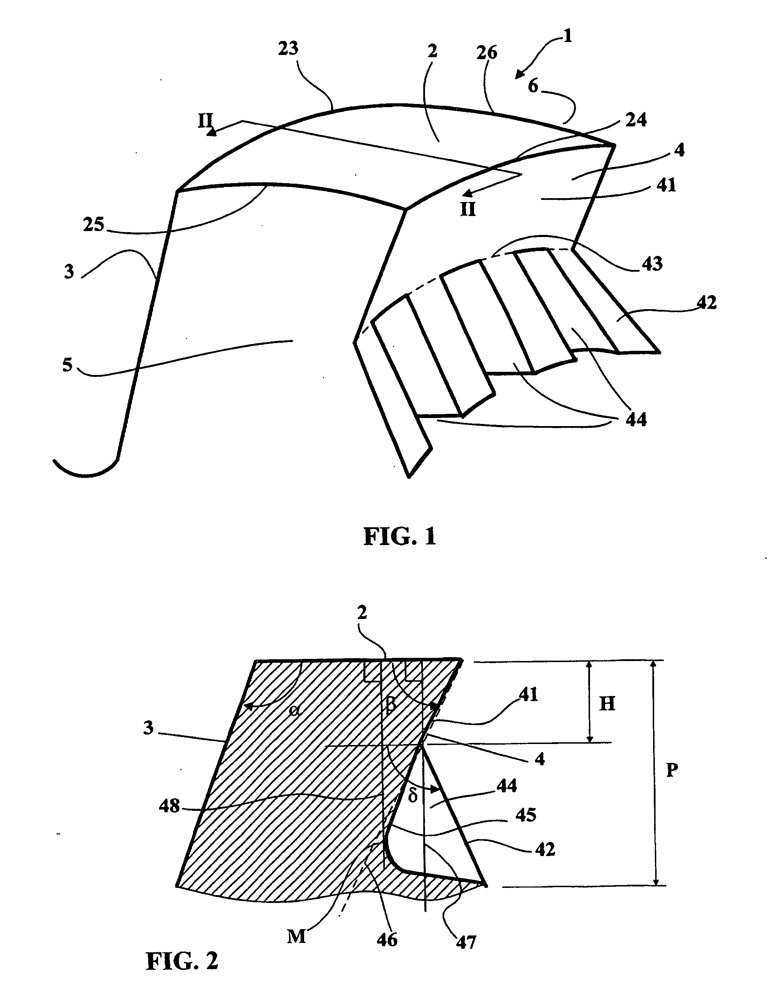

La figure **1** représente un bloc de sculpture **1** d'une bande de roulement d'un pneumatique sous la forme d'un bloc ayant sensiblement la forme d'un parallélépipède délimité par quatre faces **3, 4, 5, 6** et une face supérieure de contact **2** destinée à venir en contact avec le sol pendant le roulage du pneumatique équipé avec ladite bande. La face de contact **2** est délimitée par quatre arêtes **23, 24, 25, 26** dont deux desdites arêtes constituent une arête d'attaque **23** et une arête de fuite **24** selon le sens de roulage choisi (par arête d'attaque, on entend l'arête du bloc **1** rentrant la première dans le contact avec le sol pendant le roulage). Dans le cas présenté, les arêtes d'attaque **23** et de fuite **24** ont des géométries curvilignes sensiblement de même courbure.

Parmi les quatre faces, on distingue deux faces latérales **5, 6** espacées dans la direction axiale et deux autres faces **3, 4** espacées dans la direction longitudinale (correspondant à la direction circonférentielle sur le pneumatique), respectivement une face d'attaque **3** et une face de fuite **4**. Par définition, la face d'attaque **3** coupe la face de contact **2** selon l'arête d'attaque **23** et la face de fuite **4** coupe la face de contact **2** selon l'arête de fuite **24.**

Selon l'invention, la face d'attaque **3** est formée par une surface dont la génératrice est rectiligne et forme avec la face de contact **2** un angle α supérieur à **90°** - visible sur la figure **2** - et la face de fuite **4** comporte une partie supérieure **41,** proche de la face de contact **2,** prolongée radialement vers l'intérieur par une partie inférieure **42** s'étendant sur le reste de la hauteur du bloc. La partie supérieure **41** présente, vue dans un plan de coupe longitudinal selon la ligne **II-II** de la figure **1** et montré à la figure **2** - une inclinaison moyenne faisant, avec la face de contact, un angle β inférieur à **90°** (elle se trouve donc en contre dépouille par rapport à cette face); la partie inférieure **42** présente, vue en coupe longitudinale sur la figure **2 -** une inclinaison moyenne faisant, avec la face de contact, un angle δ supérieur à **90°**. La ligne de partage **43** (en pointillés sur la figure **1**) entre ces deux parties inférieure **42** et supérieure **41** suit un profil curviligne sensiblement identique et parallèle à celui de l'arête de fuite **24** du bloc **1** à l'état neuf.

En outre, il est réalisé trois évidements **44** formant des cavités s'étendant à partir de la partie inférieure **42** de la face de fuite vers l'intérieur du bloc. Ces trois évidements **44** de dimensions identiques sont régulièrement répartis sur la face de fuite **4** dans le sens transversal du bloc et s'étendent de la ligne de partage **43** de la partie supérieure et de la partie inférieure jusqu'à la partie la plus à l'intérieure de ladite partie inférieure. Ces évidements **44** s'étendent à l'intérieur du bloc **1** selon un même profil sensiblement triangulaire dont le contour **45** est montré sur la figure **2**.

Pour obtenir un effet optimal sur l'usure, il est nécessaire que, pour au moins un évidement **44** réalisé sur la partie inférieure d'une face de fuite d'un bloc, le point **M** de la trace du contour **45** dudit évidement, vu dans un plan de coupe longitudinal effectué suivant la ligne **II-II** de la figure **1,** le plus à l'intérieur du bloc soit situé au voisinage d'une ligne virtuelle **46** (en pointillés sur la figure **2**) prolongeant tangentiellement le profil transversal de la partie supérieure **41** en contre dépouille de la face de fuite **4**. Vus dans le plan de coupe longitudinale effectué suivant la ligne **II-II**, les évidements **44** s'étendent à l'intérieur de l'élément **1** entre la droite virtuelle **46** prolongeant la génératrice de la partie supérieure de la face de fuite et la droite **47** perpendiculaire à la face de contact de l'élément **1** à l'état neuf . Le point **M** est défini comme le point de la trace du contour **45** par lequel passe une droite **48** tangente à ladite trace et perpendiculaire à la face de contact **2** de l'élément **1** à l'état neuf.

Avantageusement, l'angle α que fait la face d'attaque **3** avec la face de contact **2** est compris entre **90°** et **120°** tandis que l'angle β que fait la partie supérieure **41** avec la face de fuite **4** est compris entre **60°** et **90°.**

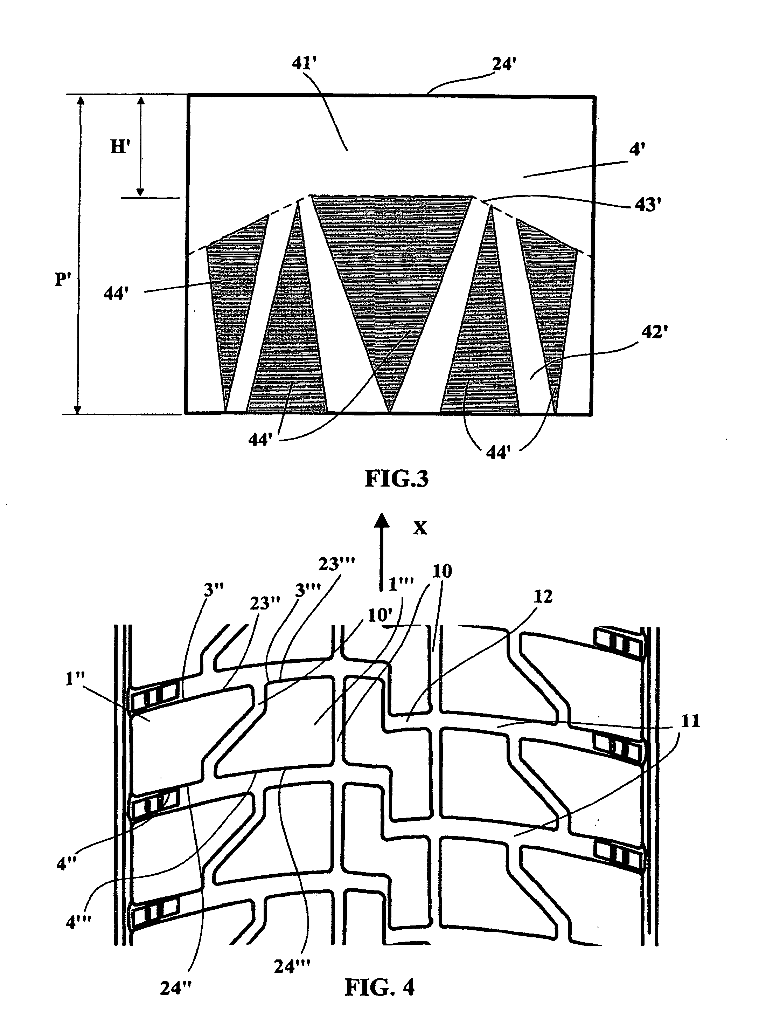

Il est bien sûr possible, tout en conservant l'effet recherché, de réaliser dans un bloc de sculpture des évidements ayant chacun une géométrie particulière (soit vue sur la face de fuite, soit à l'intérieur du bloc). Ainsi, la figure **3** montre un exemple de réalisation d'un bloc, de hauteur **P'** comportant des évidements **44'** ayant, vus sur la partie inférieure de la face de fuite, des géométries triangulaires d'aires différentes. Sur cette figure **3**, on montre la face de fuite **4'** d'un élément de sculpture d'une bande de roulement selon l'invention. Dans cet exemple, la face de fuite **4'** est divisée suivant une ligne de partage **43'** formée de trois segments en une partie supérieure **41'** coupant la face de roulement de l'élément de sculpture selon l'arête de fuite **24'** et prolongée vers l'intérieur de la bande de roulement par une partie inférieure **42'**. La partie supérieure **41'** est en contre dépouille par rapport à la surface de roulement et la partie inférieure **42'** forme avec la surface de roulement un angle supérieur à **90°**. Cette partie inférieure **42'** est pourvue d'une pluralité d'évidements **44'** ayant sur ladite partie inférieure des formes triangulaires disposées de façon alternée. À noter que pour une bonne répartition des rigidités à l'intérieur de l'élément de sculpture, les volumes des évidements dans la partie médiane dudit élément sont plus grands que ceux des évidements situés près des faces latérales. Sur cette figure **3**, la région de la partie inférieure **42'** la plus proche de la face de contact est située à une distance **H'** de ladite face.

La figure **4** représente une bande de roulement d'un pneumatique poids lourd de dimension **315/80 R 22.5** comportant une carcasse radiale surmontée d'une armature de sommet comportant une pluralité de nappes de renfort.

La bande de roulement présente une sculpture directionnelle, c'est-à-dire conférant à la bande un sens de roulage préférentiel (repéré par la flèche X sur cette figure **4**); cette sculpture comporte deux rainures longitudinales **10** rectilignes et des rainures transversales **11** reliant les rainures longitudinales **10** aux bords axialement à l'extérieur de la bande de roulement. En outre, la sculpture comporte des rainures additionnelles **10'** orientées principalement dans le sens longitudinal et présentant un tracé en ligne brisée. Ces rainures additionnelles **10'** avec les rainures transversales **11** et les rainures longitudinales **10** délimitent des blocs **1''**, **1'''** dont les arêtes d'attaque, respectivement **23''**, **23'''** ont des longueurs différentes des longueurs des arêtes de fuite, respectivement **24''**, **24'''** de façon à former une partie de bloc sensiblement plus rigide que l'autre (la partie ayant l'arête la plus longue étant la plus rigide). Les deux rainures longitudinales **10** délimitent une partie centrale de bande de roulement qui comporte également des rainures transversales en zigzag **12**. Toutes les rainures **10,10',11** ont, dans le cas présent, des profondeurs égales à **24** mm.

Pour chacun des blocs de sculpture **1''**, **1'''**, les faces d'attaque **3''**, **3'''** sont planes et ont des génératrices formant un angle α de **102°** avec la face de contact dudit bloc, tandis que chaque face de fuite **4''**, **4'''** est formée par une partie supérieure dont la génératrice est inclinée selon un angle β de **78°** prolongée par une partie inférieure dont la génératrice fait un angle δ de **102°,** les angles β et δ étant mesurés par rapport à la face de contact. Pour ajuster au mieux la rigidité des blocs **1''**, **1'''** afin d'obtenir une faible rigidité en compression tout en maintenant une forte rigidité en cisaillement, il est réalisé par moulage une série d'évidements de section rectangulaire régulièrement répartis sur la partie inférieure de la face de fuite et représentant un taux d'entaillement de l'ordre de **50%** de la surface totale de ladite partie inférieure.

Les valeurs choisies pour les angles α, β, δ permettent d'obtenir un bon compromis entre la performance en usure irrégulière (permettant d'éviter l'apparition de zones d'usure plus prononcées) et en durée de vie sur usure régulière (diminution de la vitesse d'usure).

Un essai comparatif de roulage dans les conditions nominales a été effectué avec des pneumatiques de dimension **315/80 R 22.5** ayant une bande de roulement conforme à l'invention et des pneumatiques témoins de même dimension commercialisé sous l'appellation **XDE2** par la demanderesse et ayant la même constitution à l'exception de la bande de roulement. Les pneumatiques ont été montés en jumelé sur un essieu moteur d'un véhicule poids lourd et soumis à un roulage sur route pendant 100 000 km. Au cours de ce roulage, les différences de hauteur de gomme des deux bandes de roulement ont été mesurées en différents points entre les bords et le centre desdites bandes.

La demanderesse a constaté que les pneumatiques pourvus d'une bande de roulement selon l'invention présentaient des usures en moyenne **20%** inférieures aux usures constatées sur les pneumatiques témoins. Il a en outre été observé que les pneumatiques pourvu d'une bande de roulement selon l'invention présentaient une usure irrégulière (c'est-à-dire localisée sur certaines arêtes par opposition à l'usure régulièrement répartie sur l'ensemble de la bande) très sensiblement réduite par rapport à ce qui était observé avec les pneumatiques témoins d'environ **15%** (à même amplitude d'usure irrégulière, le kilométrage parcouru avec le pneumatique selon l'invention est **15%** supérieur).

Les résultats d'essai en roulage montrent clairement que la bande de roulement conforme à l'invention permet de réduire la vitesse d'usure de ladite bande tout en retardant l'apparition d'usure irrégulière sur les bords des blocs et ainsi d'accroître la longévité du pneumatique pourvu de ladite bande.

On s'est jusqu'ici essentiellement intéressé aux sculptures de bande de roulement présentant un sens de roulage préférentiel, mais il est clair que dans le cas d'une sculpture n'ayant pas de sens de rotation a priori, il peut être réalisé une face d'attaque et une face de fuite présentant des caractéristiques assez semblables afin que les rigidités de la partie du bloc près de l'arête d'attaque et de la partie du bloc près de l'arête de fuite soient comparables. Pour cela, la face d'attaque et la face de fuite comporte chacune une première partie en contre dépouille formant avec la surface de roulement un angle inférieur à **90°,** prolongée par une partie inférieure formant avec la surface de roulement un angle supérieur à **90°**, chaque partie inférieure étant pourvue d'au moins un évidement se prolongeant dans le bloc jusqu'à au moins un plan perpendiculaire à la surface de roulement et passant par les points longitudinalement les plus à l'intérieur des parties inférieures. Toutefois cette sculpture ne présenterait pas le niveau de satisfaction obtenu avec la sculpture directionnelle selon l'invention.

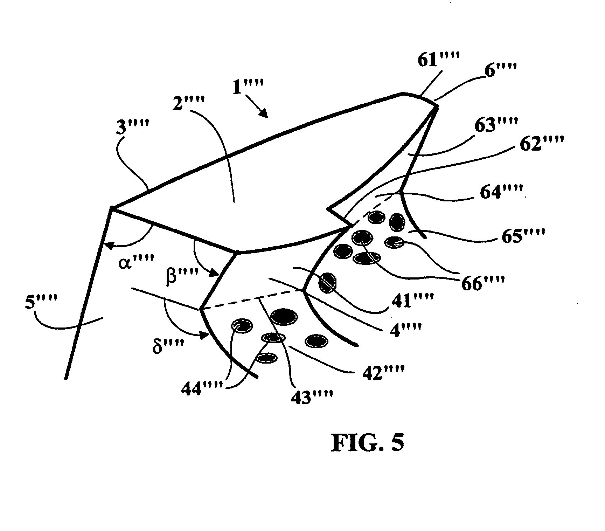

En combinaison avec l'une quelconque des variantes de sculpture décrites ou suggérées dans la présente description, il est également possible de réaliser une sculpture comportant une pluralité de blocs dont au moins une des faces latérales délimitées par les rainures longitudinales d'orientation générale rectiligne comporte une partie supérieure inclinée de façon à être en contre dépouille avec la face de contact, cette partie supérieure étant prolongée dans le sens de l'épaisseur de la bande par une partie inférieure orientée de manière à faire un angle supérieur à **90°** avec ladite face de contact. De plus, ladite partie inférieure est pourvue d'au moins un évidement pour limiter la rigidité du bloc à l'écrasement tout en maintenant une rigidité suffisante en cisaillement dans une direction perpendiculaire à la direction circonférentielle sur le pneumatique équipé avec cette sculpture. Ceci est par exemple illustré avec la variante représentée sur la figure **5**.

Sur cette figure **5** est représentée, vue en perspective, un bloc **1""** de la région épaule d'une bande de roulement pour pneumatique de poids lourd telle que, par exemple, montrée à la figure **4.** Ce bloc **1""** présente une face de roulement **2""** destinée à venir en contact avec la route, deux faces latérales **5"", 6""** délimitant des rainures longitudinales, une face d'attaque **3""** et une face de fuite **4""** délimitant au moins en partie des rainures transversales. La face d'attaque **3""** est une face courbe et inclinée en moyenne de façon à faire un angle α**""** supérieur à **90°** avec la face de roulement **2""**.

La face de fuite **4""** du bloc **1""** présente une partie supérieure **41""** en contre dépouille par rapport à la surface de contact **2""** de l'élément de sculpture **1""** avec la face de roulement **2""** du bloc (angle β**""** inférieur à **90°**); cette partie supérieure **41""** est prolongée dans le sens de l'épaisseur de la bande de roulement par une partie inférieure **42""** inclinée de manière à faire un angle moyen δ**""** supérieur à **90°** avec la face de roulement **2"".** La ligne de partage **43""** entre les parties inférieure et supérieure est située à environ **50%** de la hauteur totale du bloc.

En outre, une pluralité d'évidements **44""** débouchent sur la partie inférieure **42""** et s'étendent à l'intérieur du bloc. La forme des sections transversales desdits évidements est circulaire dans l'exemple décrit, mais bien entendu toute autre forme peut convenir.

D'autre part, l'une des faces latérales **6""** de ce bloc **1""** est formée de deux faces **61"", 62""** sensiblement parallèles à l'autre face latérale **5""**, chacune desdites faces **61"", 62""** étant reliée à l'autre par une face oblique **63"".** Avantageusement, ladite face oblique **63""** est formée d'une partie supérieure **64""** en contre dépouille par rapport à la face de contact **2"",** ladite partie supérieure **64"** étant prolongée par une partie inférieure **65""** inclinée de façon à faire un angle moyen supérieur à **90°** avec la surface de roulement **2""** et comportant au moins un évidement **66""** pour assouplir en compression ladite partie inférieure sans diminuer la rigidité de cisaillement sous un effort sensiblement transversal par rapport au bloc (c'est-à-dire dans une direction oblique par rapport à la direction longitudinale de la bande de roulement). Dans le cas présenté, les évidements réalisés sur la face de fuite et sur une partie d'au moins une face latérale, ont des géométries semblables mais il est bien sûr possible de les différencier selon l'effet recherché.

Préférentiellement, les parties inférieure et supérieure d'au moins un élément de sculpture sont quasiment planes, la partie supérieure faisant avec la surface de contact dudit élément à l'état neuf un angle β compris entre **65°** et **75°,** la partie inférieure faisant avec la même surface de contact un angle δ compris entre **95°** et **125°.**

En outre, il est avantageux que l'angle β de la partie supérieure de la face de fuite soit sensiblement égal à **75°** et l'angle δ de la partie inférieure soit sensiblement égal à **108**°.

Préférentiellement, les évidements réalisés sur la face de fuite d'au moins un élément de sculpture ont des profondeurs différentes, les évidements localisés au plus près des faces latérales ayant des profondeurs moindres, lesdites profondeurs étant mesurées perpendiculairement par rapport à ladite face de fuite.

## Revendications

1. Bande de roulement de pneumatique pour véhicule poids lourd comportant une pluralité d'éléments de sculpture agencés de façon à former une sculpture présentant une direction préférentielle de roulage, lesdits éléments (**1**) présentant une face de contact (**2**), deux faces latérales (**5,6**), une face d'attaque (**3**) et une face de fuite (**4**), les faces d'attaque et de fuite coupant la face de contact selon une arête d'attaque (**23**) et une arête de fuite (**24**), l'arête d'attaque correspondant à l'arête du bloc entrant la première en contact avec le sol, les faces d'attaque (**3**) et de fuite (**4**) présentant des inclinaisons différentes, cette bande de roulement étant **caractérisée en ce que** :

   la face de fuite (**4**) d'au moins un élément de sculpture (**1**) est formée de deux parties divisant ladite face de fuite en une partie inférieure (**42**) et une partie supérieure (**41**) dans le sens de la hauteur de l'élément, la partie supérieure (**41**), s'étendant à partir de la face de contact (**2**) dudit élément, est inclinée par rapport à la face de contact de façon à faire un angle β strictement inférieur à **90**°, la partie inférieure, prolongeant la partie supérieure vers l'intérieur de la bande est orientée de façon à faire un angle δ strictement supérieur à **90**° avec ladite face de contact et est pourvue d'au moins un évidement (**44**) s'étendant dans le bloc au moins jusqu'à un plan perpendiculaire à la face de contact et passant par le point le plus à l'intérieur, dans la direction de l'épaisseur de la bande de roulement, de la partie inférieure de la face de fuite.

2. Bande de roulement selon la revendication 1 **caractérisée en ce que** la face d'attaque (3) est inclinée de manière que l'angle α mesuré dans l'élément de relief entre la face d'attaque (2) et la face de roulement soit supérieur à **90**°.

3. Bande de roulement selon la revendication 1 ou la revendication **2 caractérisée en ce que**, à l'état neuf, la somme des aires de l'ensemble des évidements (**44**) de la partie inférieure (**42**) de la face de fuite d'au moins un élément de sculpture (**1**) est comprise entre **30**% et **70**% de la surface totale de ladite partie inférieure.

4. Bande de roulement selon l'une des revendications **1** à **3 caractérisée en ce que** pour chaque élément de sculpture (**1**) comportant une face de fuite formée d'une partie supérieure (**41**) et d'une partie inférieure (**42**), la hauteur moyenne **H** de la partie supérieure (**41**) est comprise entre20% et **80%** de la hauteur totale **P** dudit élément.

5. Bande de roulement selon l'une des revendications **1** à **4 caractérisée en ce que** les angles β et δ d'inclinaison moyenne respectivement de la partie supérieure (**41**) et de la partie inférieure (**42**) de la face de fuite (**4**) d'au moins un élément de sculpture vérifie la relation suivante :

$$\frac{1}{tg\,\delta} > \frac{2H}{(H - P).tg\beta}$$

   où **H** est la hauteur moyenne de ladite partie supérieure et **P** la hauteur totale dudit élément de sculpture.

6. Bande de roulement selon l'une des revendications **1** à **5 caractérisée en ce que** la partie inférieure (**42**) de la face de fuite (**4**) d'au moins un élément de sculpture (**1**) comporte une pluralité d'évidements (**44**) dont les traces sur la face de fuite s'étendent sur toute la hauteur de la partie inférieure, lesdits évidements (**44**) étant régulièrement répartis sur cette partie dans la direction transversale.

7. Bande de roulement selon la revendication **6 caractérisée en ce que** les évidements (**44**) sur la face de fuite d'au moins un élément de sculpture ont des profondeurs différentes, les évidements localisés au plus près des faces latérales (**5**, **6**) ayant des profondeurs moindres, lesdites profondeurs étant mesurées perpendiculairement par rapport à ladite face de fuite.

8. Bande de roulement selon l'une des revendications **1** à **7 caractérisée en ce que** les parties inférieure (**42**) et supérieure (**41**) d'au moins un élément de sculpture sont quasiment planes, la partie supérieure (**41**) faisant avec la surface de contact (**2**) dudit élément à l'état neuf un angle β compris entre **65**° et **75**°, la partie inférieure (**42**) faisant avec la même surface de contact (**2**) un angle δ compris entre **95**° et **125**°.

9. Bande de roulement selon la revendication **8 caractérisée en ce que** l'angle β de la partie supérieure (**41**) de la face de fuite est sensiblement égal à **75**° et l'angle δ de la partie inférieure (**42**) est sensiblement égal à **108**°.

**10.** Pneumatique pourvu d'une bande de roulement pourvue d'au moins un élément de sculpture défini selon l'une quelconque des revendications **1** à **8**.

**11.** Enveloppe de pneumatique poids lourd dont la bande de roulement comporte une sculpture directionnelle formée par une pluralité de rainures d'orientation générale circonférentielle (**10,10'**) et une pluralité de rainures transversales (**11**), lesdites rainures (**10,10',11**) délimitant une pluralité de motifs de sculpture (**1", 1'''**), chaque motif présentant une face de contact, deux faces latérales, une face d'attaque (**3", 3'''**) et une face de fuite (**4", 4'''**), les faces d'attaque et de fuite coupant la face de contact selon une arête d'attaque (**23", 23'''**) et une arête de fuite (**24", 24'''**), l'arête d'attaque correspondant à l'arête du motif de sculpture entrant la première en contact avec le sol,
la face d'attaque (**23", 23'''**) étant orientée de manière que l'angle a mesuré dans le motif entre la face d'attaque et la face de contact soit supérieur à **90°**, la face de fuite (**24", 24'''**) présentant une partie en contre dépouille par rapport à la face de roulement, la bande de roulement étant **caractérisée en ce que** :
la face de fuite est formée de deux parties divisant ladite face de fuite en une partie inférieure et une partie supérieure dans le sens de la hauteur du motif, la partie supérieure s'étendant à partir de la face de roulement dudit motif, la partie inférieure prolongeant la partie supérieure vers l'intérieur de la bande, la partie inférieure représentant entre **20%** et **80%** de la hauteur totale de la face de fuite, la partie supérieure de la face de fuite étant en contre dépouille (c'est-à-dire inclinée d'un angle β strictement inférieur à **90°** par rapport à la face de contact), tandis que la face inférieure, orientée de façon à faire un angle δ strictement supérieur à **90°** avec la même face de contact, est pourvue d'une pluralité d'évidements s'étendant dans le bloc au moins jusqu'à un plan perpendiculaire à la face de contact et passant par le point radialement le plus à l'intérieur de la partie inférieur de la face de fuite, la somme des aires desdits évidements sur la partie inférieure étant comprise entre **30%** et **70%** de l'aire totale de ladite partie inférieure.

**Patentansprüche**

**1.** Lauffläche eines Luftreifens für einen Schwerlastwagen, mit mehreren Profilelementen, die so angeordnet sind, dass sie ein Profil bilden, das eine bevorzugte Fahrrichtung aufweist, wobei die Elemente (1) eine Kontaktfläche (2), zwei Seitenflächen (5, 6), eine Vorderfläche (3) und eine Hinterfläche (4) aufweisen, wobei die Vorder- und Hinterfläche die Kontaktfläche entlang einer Vorderkante (23) und einer Hinterkante (24) schneiden, wobei die Vorderkante der Kante des Blocks entspricht, die zuerst mit dem Boden in Kontakt kommt, wobei die Vorderfläche (3) und die Hinterfläche (4) unterschiedliche Neigungen aufweisen, wobei diese Lauffläche **dadurch gekennzeichnet ist, dass**:

die Hinterfläche (4) mindestens eines Profilelements (1) aus zwei Teilen gebildet wird, die die Hinterfläche in einen unteren Teil (42) und einen oberen Teil (41) in Richtung der Höhe des Elements trennen, wobei der obere Teil (41), der sich ausgehend von der Kontaktfläche (2) des Elements erstreckt, in Bezug auf die Kontaktfläche so geneigt ist, dass er einen Winkel β absolut kleiner als 90° bildet, während der den oberen Teil zur Innenseite der Lauffläche verlängernde untere Teil so ausgerichtet ist, dass er einen Winkel δ absolut größer als 90° mit der Kontaktfläche bildet und mit mindestens einer Aussparung (44) versehen ist, die sich im Block zumindest bis zu einer Ebene senkrecht zur Kontaktfläche erstreckt, die in Richtung der Dicke der Lauffläche durch den am weitesten innen liegenden Punkt des unteren Teils der Hinterfläche verläuft.

**2.** Lauffläche nach Anspruch 1, **dadurch gekennzeichnet, dass** die Vorderfläche (3) so geneigt ist, dass der im Reliefelement zwischen der Vorderfläche (2) und der Abrolloberfläche gemessene Winkel α größer als 90° ist.

**3.** Lauffläche nach Anspruch 1 oder 2, **dadurch gekennzeichnet, dass** im Neuzustand die Summe der Flächenräume der Gesamtheit der Aussparungen (44) des unteren Teils (42) der Hinterfläche mindestens eines Profilelements (1) zwischen 30% und 70% der Gesamtfläche des unteren Teils liegt.

**4.** Lauffläche nach einem der Ansprüche 1 bis 3, **dadurch gekennzeichnet, dass** für jedes Profilelement (1), das eine Hinterfläche aufweist, die von einem oberen Teil (41) und einem unteren Teil (42) gebildet wird, die mittlere Höhe H des oberen Teils (41) zwischen 20% und 80% der Gesamthöhe P des Elements liegt.

**5.** Lauffläche nach einem der Ansprüche 1 bis 4, **dadurch gekennzeichnet, dass** die Winkel β und δ der mittleren Neigung des oberen Teils (41) bzw. des unteren Teils (42) der Hinterfläche (4) mindestens eines Profilelements die folgende Beziehung bestätigen:

$$\frac{1}{\mathrm{tg}\delta} > \frac{2H}{(H - P).\mathrm{tg}\beta}$$

wobei H die mittlere Höhe des oberen Teils und P die Gesamthöhe des Profilelements ist.

6. Lauffläche nach einem der Ansprüche 1 bis 5, **dadurch gekennzeichnet, dass** der untere Teil (42) der Hinterfläche (4) mindestens eines Profilelements (1) mehrere Aussparungen (44) aufweist, deren Spuren auf der Hinterfläche sich über die ganze Höhe des unteren Teils erstrecken, wobei die Aussparungen (44) in Querrichtung regelmäßig über diesen Teil verteilt sind.

7. Lauffläche nach Anspruch 6, **dadurch gekennzeichnet, dass** die Aussparungen (44) auf der Hinterfläche mindestens eines Profilelements unterschiedliche Tiefen aufweisen, wobei die den Seitenflächen (5, 6) am nächsten liegenden Aussparungen geringere Tiefen haben, wobei die Tiefen senkrecht in Bezug auf die Hinterfläche gemessen werden.

8. Lauffläche nach einem der Ansprüche 1 bis 7, **dadurch gekennzeichnet, dass** der untere Teil (42) und der obere Teil (41) mindestens eines Profilelements praktisch eben sind, wobei der obere Teil (41) mit der Kontaktfläche (2) des Elements im Neuzustand einen Winkel β zwischen 65° und 75° bildet, während der untere Teil (42) mit der gleichen Kontaktfläche (2) einen Winkel δ zwischen 95° und 125° bildet.

9. Lauffläche nach Anspruch 8, **dadurch gekennzeichnet, dass** der Winkel β des oberen Teils (41) der Hinterkante im wesentlichen gleich 75° und der Winkel δ des unteren Teils (42) im wesentlichen gleich 108° ist.

10. Luftreifen, der mit einer Lauffläche versehen ist, die mindestens ein Profilelement aufweist, das gemäß einem der Ansprüche 1 bis 8 definiert ist.

11. Mantel eines Schwerlastwagen-Luftreifens, dessen Lauffläche ein Lenkprofil aufweist, das von mehreren Rillen mit allgemeiner Umfangsausrichtung (10, 10') und von mehreren Querrillen (11) gebildet wird, wobei die Rillen (10, 10', 11) mehrere Profilmuster (1", 1''') begrenzen, wobei jedes Muster eine Kontaktfläche, zwei Seitenflächen, eine Vorderfläche (3", 3''') und eine Hinterfläche (4", 4''') aufweist, wobei die Vorder- und Hinterfläche die Kontaktfläche entlang einer Vorderkante (23", 23''') und einer Hinterkante (24", 24''') schneiden, wobei die der Kante des Profilmusters entsprechende Vorderkante zuerst mit dem Boden in Kontakt kommt, wobei die Vorderfläche (23", 23''') so ausgerichtet ist, dass der im Muster zwischen der Vorderfläche und der Kontaktfläche gemessene Winkel α größer als 90° ist, wobei die Hinterkante (24", 24''') einen in Bezug auf die Abrolloberfläche hinterschnittenen Bereich aufweist,

wobei die Lauffläche **dadurch gekennzeichnet ist, dass**

die Hinterfläche von zwei Teilen gebildet wird, welche die Hinterfläche in einen unteren Teil und einen oberen Teil in Richtung der Höhe des Musters trennen, wobei der obere Teil sich ausgehend von der Abrolloberfläche des Musters erstreckt, wobei der untere Teil den oberen Teil zur Innenseite der Lauffläche verlängert, wobei der untere Teil zwischen 20% und 80% der Gesamthöhe der Hinterfläche darstellt, wobei der obere Teil der Hinterfläche hinterschnitten (d.h. um einen Winkel β von absolut weniger als 90° in Bezug auf die Kontaktfläche geneigt) ist, während der untere Teil, der so ausgerichtet ist, dass er einen Winkel δ von absolut mehr als 90° mit der gleichen Kontaktfläche bildet, mit mehreren Aussparungen versehen ist, die sich im Block mindestens bis zu einer Ebene senkrecht zur Kontaktfläche erstrecken, die durch den radial am weitesten im Inneren des unteren Teils der Hinterfläche liegenden Punkt verläuft,

wobei die Summe der Flächenräume der Aussparungen im unteren Teil zwischen 30% und 70% des Gesamtflächenraums des unteren Teils liegt.

## Claims

1. A tyre tread for a heavy vehicle, comprising a plurality of tread pattern elements arranged so as to form a tread pattern having a preferred direction of travel, said elements (1) having a contact face (2), two lateral faces (5, 6), a leading face (3) and a trailing face (4), the leading and trailing faces intersecting the contact face along a leading ridge (23) and a trailing ridge (24), the leading ridge corresponding to that ridge of the block which first comes into contact with the ground, the leading (3) and trailing (4) faces having different inclinations, this tread being **characterised in that**:

   the trailing face (4) of at least one tread pattern element (1) is formed of two parts which divide said trailing face into a lower part (42) and an upper part (41) in the direction of the height of the element, the upper part (41), extending from the contact face (2) of said element, is inclined relative to the contact face so as to form an angle β strictly less than 90°, the lower part, extending the upper part towards the inside of the tread, is oriented so as to form an angle δ strictly greater than 90° with said contact face and is provided with at least one recess (44) extending into the block at least as far as a plane perpendicular to the contact face and passing through the innermost point, in the direction of the thickness of the tread, of the lower part of the trailing face.

2. A tread according to Claim 1, **characterised in that** the leading face (3) is inclined such that the angle α measured in the element in relief between the leading face (2) and the running face is greater than 90°.

3. A tread according to Claim 1 or Claim 2, **characterised in that**, when new, the total of the areas of all the recesses (44) of the lower part (42) of the trailing face of at least one tread pattern element (1) is between 30% and 70% of the total surface area of said lower part.

4. A tread according to one of Claims 1 to 3, **characterised in that** for each tread pattern element (1) comprising a trailing face formed of an upper part (41) and a lower part (42) the average height H of the upper part (41) is between 20% and 80% of the total height P of said element.

5. A tread according to one of Claims 1 to 4, **characterised in that** the angles β and δ of average inclination respectively of the upper part (41) and of the lower part (42) of the trailing face (4) of at least one tread pattern element satisfy the following relationship:

$$\frac{1}{tg\delta} > \frac{2H}{(H - P).tg\beta}$$

in which H is the average height of said upper part and P the total height of said tread pattern element.

6. A tread according to one of Claims 1 to 5, **characterised in that** the lower part (42) of the trailing face (4) of at least one tread pattern element (1) comprises a plurality of recesses (44), the traces of which on the trailing face extend over the entire height of the lower part, said recesses (44) being regularly distributed over this part in the transverse direction.

7. A tread according to Claim 6, **characterised in that** the recesses (44) formed on the trailing face of at least one tread pattern element have different depths, the recesses located closest to the lateral faces (5, 6) having lesser depths, said depths being measured perpendicular to said trailing face.

8. A tread according to one of Claims 1 to 7, **characterised in that** the lower (42) and upper (41) parts of at least one tread pattern element are virtually planar, the upper part (41) forming with the contact surface (2) of said element when new an angle β of between 65° and 75°, the lower part (42) forming with the same contact surface (2) an angle δ which is between 95° and 125°.

9. A tread according to Claim 8, **characterised in that** the angle β of the upper part (41) of the trailing face is substantially equal to 75° and the angle δ of the lower part (42) is substantially equal to 108°.

10. A tyre provided with a tread provided with at least one tread pattern element defined according to any one of Claims 1 to 8.

11. A heavy-vehicle tyre, the tread of which comprises a directional tread pattern formed by a plurality of grooves of circumferential general orientation (10, 10') and a plurality of transverse grooves (11), said grooves (10, 10', 11) defining a plurality of tread pattern motifs (1", 1'''), each motif having a contact face, two lateral faces, a leading face (3", 3''') and a trailing face (4", 4'''), the leading and trailing faces intersecting the contact face along a leading ridge (23", 23''') and a trailing ridge (24", 24'''), the leading ridge corresponding to that ridge of the tread pattern motif which first comes into contact with the ground, the leading face (23", 23''') being oriented such that the angle α measured in the motif between the leading face and the contact face is greater than 90°, the trailing face (24", 24''') having a part which is undercut relative to the running face, the tread being **characterised in that**:

the trailing face is formed of two parts which divide said trailing face into a lower part and an upper part in the direction of the height of the motif, the upper part extending from the running face of said motif, the lower part extending the upper part towards the inside of the tread, the lower part representing between 20% and 80% of the total height of the trailing face, the upper part of the trailing face being undercut (that is to say, inclined at an angle β strictly less than 90° relative to the contact face), whereas the lower face, which is oriented so as to form an angle δ strictly greater than 90° with the same contact face, is provided with a plurality of recesses which extend within the block at least as far as a plane perpendicular to the contact face and passing through the radially innermost point of the lower part of the trailing face, the total of the areas of said recesses on the lower part being between 30% and 70% of the total area of said lower part.

**FIG. 1**

**FIG. 2**

FIG.3

FIG. 4

**FIG. 5**